Europäisches Patentamt

European Patent Office

Office européen des brevets

(19)

(11) Publication number: **0 254 503**
**A2**

(12) **EUROPEAN PATENT APPLICATION**

(21) Application number: 87306362.2

(22) Date of filing: 17.07.87

(51) Int. Cl.⁴: **F17D 3/08**

(30) Priority: 23.07.86 GB 8617977

(43) Date of publication of application:
27.01.88 Bulletin 88/04

(84) Designated Contracting States:
**DE ES FR GB IT NL**

(71) Applicant: **PIPELINE ENGINEERING & SUPPLY CO. LTD.**
**Catterick Bridge Ind. Estate Richmond**
**North Yorkshire DL10 7JG(GB)**

(72) Inventor: **Addis, Robert C.**
**33 Lees Lane**
**Northallerton North Yorkshire(GB)**

(74) Representative: **Davies, Christopher Robert et al**
**Frank B. Dehn & Co. Imperial House 15-19 Kingsway**
**London WC2B 6UZ(GB)·**

(54) Pig signaller.

(57) A device for signalling the presence of a pig in a pipeline (5) comprises a housing (2) sealingly con-netected over an opening (6) in a pipeline wall, an actuating member (7) extending through the opening (6) and displaceable inwardly of the housing (2) by a passing pig. The member (7) mounts a first magnet (12). A signalling member (16) is mounted externally of the housing for movement between a normal position and a signalling position in which it provides a visual indication of the passage of a pig. A second magnet (30) is mounted to the member (16) and is arranged to be repulsed by the first magnet upon inward displacement thereof into the housing so that the member is moved to its signalling position.

FIG. 1.

## "Pig signaller"

This invention relates to pig signallers, that is devices for automatically signalling the passage of a pipeline pig past a predetermined point in a pipeline.

In a large pipeline system, such as occurs for example in the petroleum industry, it is common practice to employ pigs for separating batches of different fluids passing through the system, so that the fluids do not mix and so that each batch may be directed along an appropriate route in the system. The pig has a diameter such that it will substantially fill the interior of a pipe whilst being able to pass therethrough. Other types of pig are used for example for cleaning and scavenging pipes, and they may be of various different shapes such as spherical and cylindrical, and all of these different kinds of pig are intended to be encompassed by the term pig as used herein.

It is desirable in many circumstances to be able to locate the whereabouts of a pig in a pipeline system, and one commonly used method of location is to provide signallers connected to the pipeline at various points, each signaller serving to indicate the passage of a pig past the point at which it is connected. Such signallers have, however, tended up to now to be unduly complicated and thus prone to failure, and it is therefore a primary object of the present invention to provide a pig signaller of a simple and reliable nature.

Viewed from one aspect the present invention provides a pig signaller comprising a housing adapted to be sealingly connected to a pipe over an opening in the wall thereof, an actuating member arranged to extend from the interior of said housing through such an opening and to be displaceable inwardly of the housing by a passing pig, a first magnet movably mounted internally of the housing and associated with the said actuating member for displacement in conjunction therewith, a signalling member mounted externally of the housing for movement between a normal position and a signalling position in which it provides a visual signal of the passage of a pig, and a second magnet movably mounted externally of the housing, said displacement of the first magnet causing movement of the second magnet by magnetic repulsion therebetween, and said movement of the second magnet causing movement of the signalling member to its said signalling position.

Preferably the said second magnet is mounted on the said signalling member for movement therewith.

Preferably the said signalling member is pivotally mounted for movement between its said normal and signalling positions, and is counterbalanced towards its signalling position. Then, in one form of the invention the said signalling position is a stable position of the said signalling member, in which it is held by gravity acting on its counterbalance weight, and the device includes means for holding the signalling member in its said normal (unstable) position until it is moved to its signalling position as aforesaid.

Such holding means preferably comprises a magnetic or magnetisable means providing a force of attraction acting to maintain the signalling member in its normal (unstable) position, such force of attraction being overcome by the repulsion force between the first and second magnets upon said displacement of the first magnet by a passing pig. Such magnetic means may take any convenient form, for example a third magnet arranged to cooperate with the second magnet or with some other magnetisable part of the signalling member, or an element or layer formed of a magnetisable material and arranged to interact with and attract the second magnet when the member is in its normal position.

In another form of the invention the said normal, i.e. non-signalling, position of the signalling member is a stable position thereof, from which only a small displacement is necessary before the counterbalance weight acts to move it to its signalling position, which is also stable; in this embodiment the aforementioned holding means is of course no longer necessary but it may still be provided if desired, to reduce the likelihood of spurious actuation of the device.

Preferably the said actuating member is arranged to provide a degree of sealing between the interior of an associated pipe and the interior of the said housing, by being a close sliding fit in a bore in the housing wall through which it extends, so as to reduce as far as possible the ingress into the housing of products flowing in the pipe.

Preferably the said actuating member comprises a plunger slidable in such a bore and connected to a piston slidably mounted in a further internal bore of the housing, the said first magnet being secured to the end of the piston remote from the plunger and being received in said internal bore. Preferably the actuating member is spring-biassed outwardly of the housing and the said piston is engageable with an internal shoulder of the housing to define the outward position of the plunger, ready for engagement by a passing pig.

The said housing may be arranged to be secured directly to a pipe, for example by welding around a said opening therein, or it may be provided with a flange to enable it to be bolted to a corresponding flange on a branch welded into the pipe.

If desired the signaller may also incorporate means for providing an electrical signal upon the passage of a pig, for example in the form of a magnetic switch mounted externally of the said housing and arranged to be actuated by the said displacement of the first magnet within the housing.

An embodiment of the invention, together with some modifications, will now be described by way of example and with reference to the accompanying drawings, in which:-

Figure 1 is a vertical cross-sectional view of a pig signaller according to the invention, shown welded to a pipe;

Fig. IA illustrates a modification:

Figure 2 illustrates a further modification;

Figure 2A is a cross-section on the line A-A of Figure 2;

Figure 3 illustrates the manner in which a ball valve may be located between the signaller and an associated pipe;

Figure 3A is a cross-section on the line B-B of Figure 3, further illustrated the use of a jacking bracket;

and Figures 4A to 4E illustrate schematically alternative arrangements of magnetic holding means.

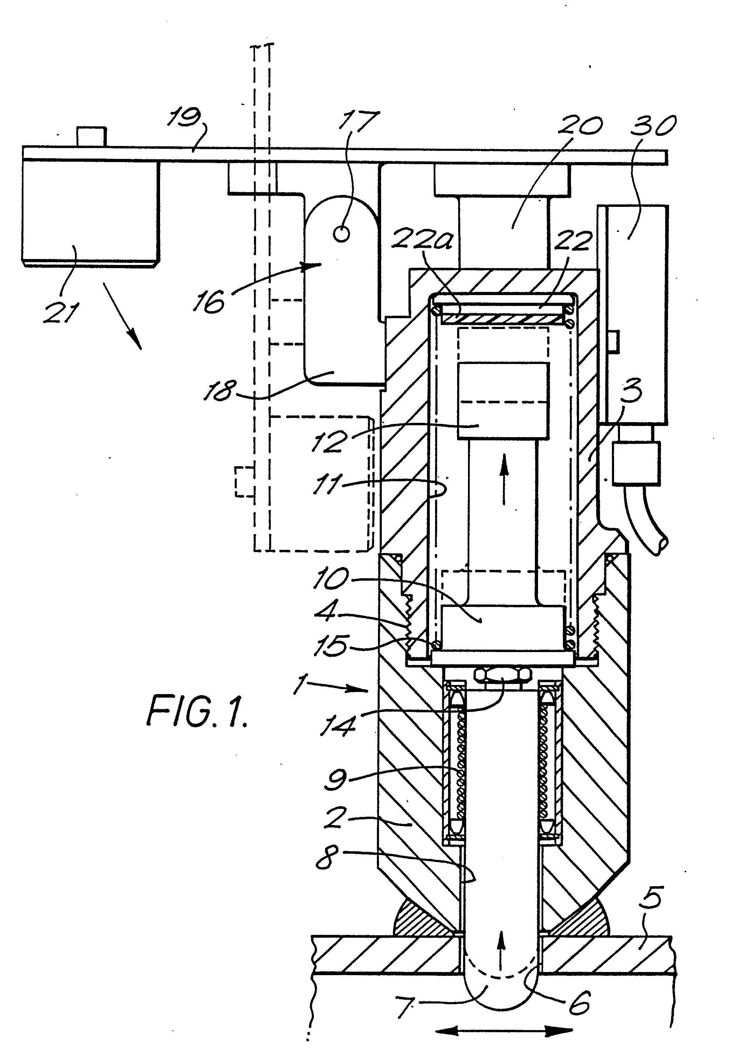

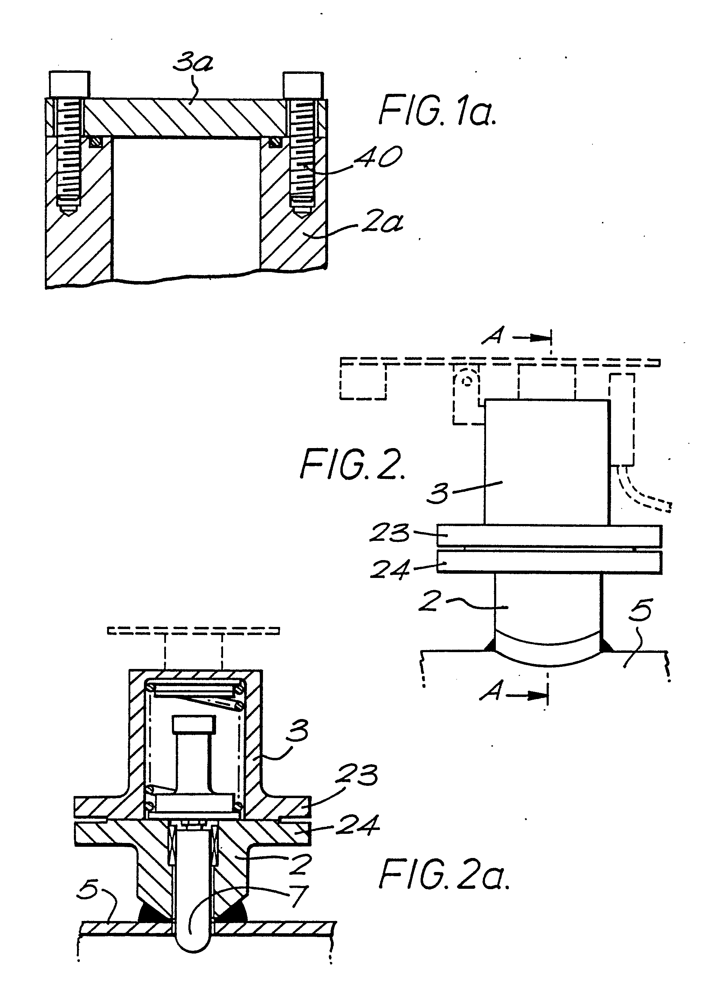

Referring to Figure 1 the pig signaller comprises a housing 1 made up of a tubular lower boss 2 and a cap 3, screw-threadedly interconnected at 4. The lower end of the boss 2 is adapted to be welded to a pipe 5 around an opening 6 in the wall thereof, to secure the signaller in its working position.

An actuating member includes a plunger 7 which makes a close sliding fit in the internal bore 8 of the boss 2. A linear bearing 9, or low friction sleeve, is arranged to guide the plunger, the upper end of which is provided with an adjusting locknut 14 engaging the lower end of a piston 10 slidable in a bore 11 in the cap 3. A first magnet 12 is mounted on the top end of the piston 10, for vertical movement in the bore 11 in the cap, the locknut 14 enabling the working position of the plunger to be adjusted.

The lower end of the plunger 7 extends through the opening 6 into the interior of the pipe 5 and is displaceable upwardly by a passing pig (not shown). The position illustrated in ghost lines is the upwardly displaced position of the plunger, and its associated parts, when it is engaged by a pig. The normal position of the plunger, to which it is biassed by a spring 15 acting on the piston 10 and which is defined by the engagement of the piston with an internal shoulder formed by the upper end of the boss 2, is shown in full lines, as are the normal positions of the piston and first magnet 12.

A signalling member 16 is pivotally mounted at 17 on a bracket 18 secured to the outside of the cap 3, and is movable between a normal position shown in full lines and a signalling position shown in ghost lines. The signalling member includes an arm 19 which, in the signalling position, stands up to provide a visual indication of the passage of a pig past the device.

A second magnet 20 is mounted near to one end of the arm 19, and a counterbalance weight 21 is mounted at the other end. In this embodiment the center of gravity of the signalling member is located slightly to the left of the pivot point 17 so that the signalling position of the signalling member is a stable position in which it is held by gravity acting on the counterbalance weight 21.

As shown in Figure 1 the signalling member is held in its first position by interaction between an element 22 of magnetisable material and the second magnet 20, the cap being formed of a substantially non-magnetisable material. The element 22 is held in place by the top of the spring 15, and is provided with an insulating layer 22a e.g. of polyurethane or the like to prevent the first magnet "sticking" thereto when the piston is raised by a passing pig.

The first magnet 12 is oriented so that there is magnetic repulsion between it and the second magnet 20. As a result, when the plunger 7 is displaced upwardly in the housing 1 by the passage of a pig, magnetic repulsion between the magnets 12 and 20 overcomes the magnetic attraction between magnet 20 and element 22 and causes anti-clockwise movement of the signalling member about its pivot 17, past the balance point, to a position in which the counterbalance weight 21 causes the signalling member to move to its signalling position shown in ghost lines. It will be understood that in the normal positions of all of the parts, as illustrated in full lines in Figure 1, the first magnet 12 inside the housing is too far displace downwardly away from the magnet 20 to have any substantial effect on the latter, and the signalling member is therefore held in its normal position by attraction between the magnet 20 and element 22.

Figure 1A illustrates a modification wherein the tubular cap is replaced by a flat cap 3a secured to an extended tubular boss 2a by means of bolts 40. Figures 2 and 2A show a further modification in which the lower boss 2 and cap 3 of the pig signaller of Figure 1 are interconnected via mating flanges 23 and 24 rather than by a screw-thread. Otherwise these embodiments are substantially the same as that of Figure 1.

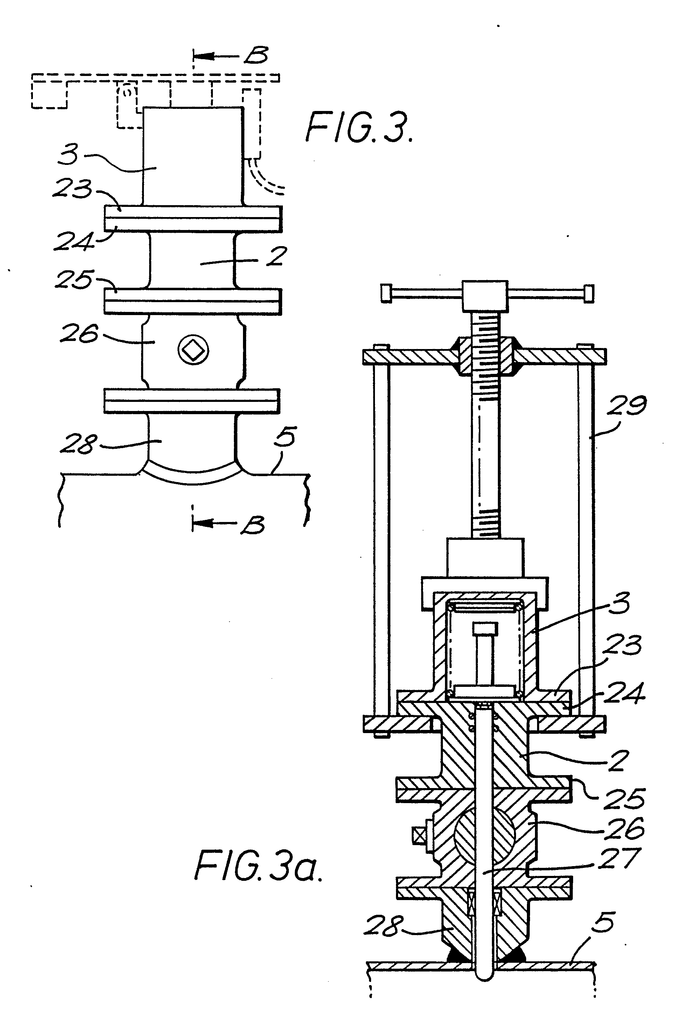

Figures 3 and 3A show a further modification in which the signaller of Figures 2 and 2a is mounted, via a flange 25 on the boss 2, to a ball valve 26 through which the much elongated plunger 27 extends, the ball valve being flange mounted on a short branch 28 welded into the pipe 5. A jacking bracket 29 may be used to control the disconnection of the cap 3 from the lower boss 2 and the upward movement of the cap and the plunger 27 to a position in which the ball valve 26 may be closed, once the plunger has cleared it, thus enabling the pig signaller to be dismantled for servicing without having to depressurise an associated pipe.

In all three embodiments an additional magnetic switch, e.g. a reed switch indicated at 30 in Figure 1, may be mounted on the cap 3 and arranged to be operated by the upward movement of the magnet 12 to provide an electrical signal upon passage of a pig.

It will be understood that devices according to the invention are by no means restricted to use in a vertical orientation as in the case of the illustrated embodiment. Indeed, such devices may be adapted to operate when connected to a pipe in any desired orientation, in particular horizontally, by suitable arrangement of the magnets and/or the balance of the signalling member to ensure that such member remains respectively in its normal position and in its signalling position in the appropriate phases of operation of the device.

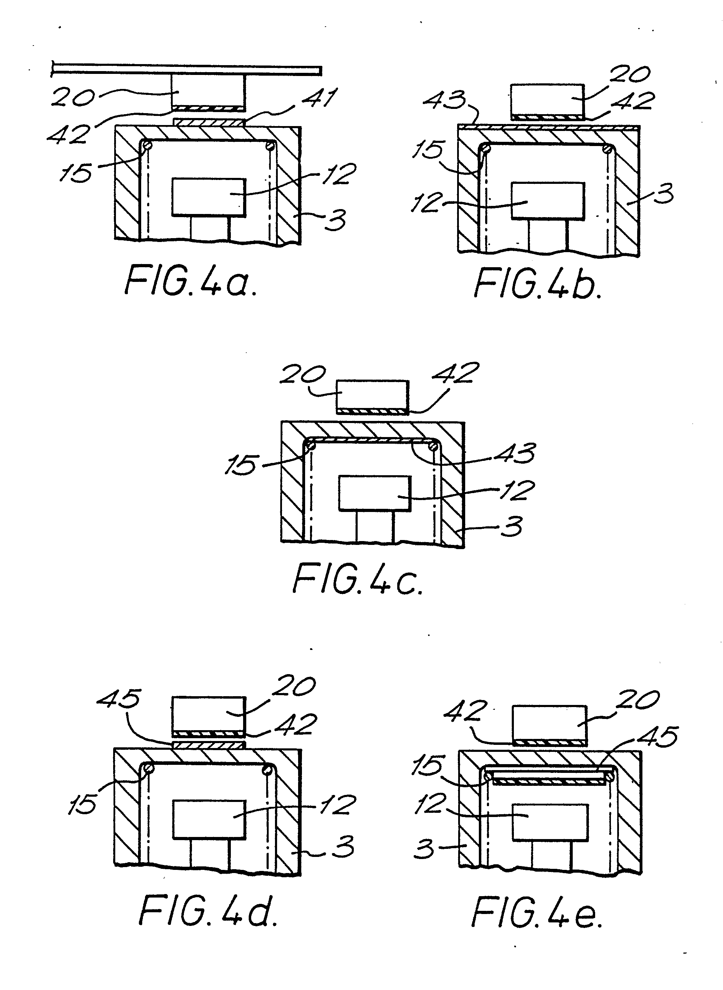

As shown in Figures 4A to 4E alternative forms of holding means for maintaining the signalling member in is normal (unstable) position are envisaged. In Figure 4A a magnetic element 41 is secured to the top of the cap 3, an insulating layer 42 being provided on the lower surface of magnet 20. The layer 42 avoids a sticking effect between the element 41 and magnet 20, but permits a sufficient force of attraction to maintain the member in its unstable condition until the first magnet 12 is raised by a passing pig whereupon the attaction force is overcome by repulsion between the magnets 12,20. In Fig 4B the element 41 is replaced by a thin layer 43 of magnetic material, which may be deposited on the top of the cap 3 e.g. by hot spraying. In Fig. 4C the layer 43 is provided on the under side of the cap. In Figures 4D and 4E a weak permanent magnet orientated to attract the magnet 20 is provided either above or below the top of the cap 3, the magnet providing a force of attraction with respect to the magnet 20 which is overcome by the magnet 12 when the plunger is raised.

## Claims

1. A pig signaller comprising a housing adapted to be sealingly connected to a pipe over an opening in the wall thereof, an actuating member arranged to extend from the interior of said housing through such an opening and to be displaceable inwardly of the housing by a passing pig, a first magnet movably mounted internally of the housing and associated with the said actuating member for displacement in conjunction therewith, a signalling member mounted externally of the housing for movement between a normal position and a signalling position in which it provides a visual signal of the passage of a pig, and a second magnet movably mounted externally of the housing, said displacement of the first magnet causing movement of the second magnet by magnetic repulsion therebetween, and said movement of the second magnet causing movement of the signalling member to its said signalling position.

2. A pig signaller as claimed in claim 1 wherein the second magnet is mounted on the signalling member for movement therewith.

3. A pig signaller as claimed in claim 1 or 2 wherein the said signalling member is pivotally mounted for movement between its said normal and signalling positions, and is counterbalanced towards its signalling position.

4. A pig signaller as claimed in claim 3 wherein the said signalling position is a stable position of the said signalling member, in which it is held by gravity acting on its counterbalance weight, and the device includes means for holding the signalling member in its said normal (unstable) position until it is moved to its signalling position as aforesaid.

5. A pig signaller as claimed in claim 4 wherein the holding means comprises a magnetic or magnetisable means providing a force of attraction acting to maintain the signalling member in its normal (unstable) position, such force of attraction being overcome by the repulsion force between the first and second magnets upon said displacement of the first magnet by a passing pig.

6. A pig signaller as claimed in claim 1 or 2 wherein the said normal, i.e. non-signalling, position of the signalling member is a stable position thereof, from which only a small displacement is necessary before the counterbalance weight acts to move it to its signalling position, which is also stable.

7. A pig signaller as claimed in any preceding claim wherein the said actuating member is arranged to provide a degree of sealing between the interior of an associated pipe and the interior of the said housing, by being a close sliding fit in a bore in the housing wall through which it extends.

8. A pig signaller as claimed in claim 7 wherein the said actuating member comprises a plunger slidable in such a bore and connected to a piston slidably mounted in a further internal bore of the housing, the said first magnet being secured to the end of the piston remote from the plunger and being received in said internal bore.

9. A pig signaller as claimed in any preceding claim wherein the actuating member is spring biased outwardly of the housing.

10. A pig signaller as claimed in any preceding claim further comprising means for providing an electrical signal upon the passage of a pig.

FIG.1.

FIG. 1a.

FIG. 2.

FIG. 2a.

FIG.3.

FIG.3a.

FIG.4a.

FIG.4b.

FIG.4c.

FIG.4d.

FIG.4e.